# EUROPEAN PATENT SPECIFICATION

(11) **EP 3 352 323 B1**
(45) Date of publication and mention of the grant of the patent: **02.06.2021**
(21) Application number: 17194296.4
(22) Date of filing: 02.10.2017
(51) Int. Cl.: H02J 7/00, H01M 10/44

(54) **METHOD AND SYSTEM FOR AUTOMATIC SWITCHOVER BETWEEN WORKING STATES OF MULTI-BATTERY PACKS OF ELECTRIC VEHICLES**
VERFAHREN UND SYSTEM ZUR AUTOMATISCHEN UMSCHALTUNG ZWISCHEN BETRIEBSZUSTÄNDEN VON MEHRBATTERIEPACKS VON ELEKTROFAHRZEUGEN
PROCÉDÉ ET SYSTÈME DE COMMUTATION AUTOMATIQUE ENTRE DES ÉTATS DE FONCTIONNEMENT DE PAQUETS MULTI-BATTERIES DE VÉHICULES ÉLECTRIQUES

(30) Priority: 22.01.2017 CN 201710057642
(43) Date of publication of application: 25.07.2018
(73) Proprietor: Guang Dong Greenway Technology Co., Ltd, Dongguan City Guangdong 523000 (CN)
(72) Inventor: HUANG, Lichong, Dongguan, Guangdong 523000 (CN); LI, Linchang, Dongguan, Guangdong 523000 (CN); CHEN, Zhijun, Dongguan, Guangdong 523000 (CN); LI, Kaikai, Dongguan, Guangdong 523000 (CN); WU, Liping, Dongguan, Guangdong 523000 (CN); QIN, Chunqiang, Dongguan, Guangdong 523000 (CN)
(74) Representative: Lang, Christian

(56) References cited:
- WO-A1-2016/074216
- US-A1- 2015 022 140
- US-A1- 2016 380 313

## Description

The present disclosure belongs to the field of battery control technology, and more particularly to a method and system for automatic switchover between working states of multi-battery packs of electric vehicles.

Due to the advantages such as energy conservation, low carbon, power conservation and convenience, electric vehicles are widely used in people's daily life. However, due to the influence of factors including assembly space, appearances and costs of the multi-battery packs for electric vehicles, the capacity of a single battery is not large enough and the battery life is not long enough. In the prior art, in order to solve these problems, a plurality of battery packs is combined for use. However, in the actual application, it is not convenient to use a plurality of battery packs. Due to the voltage differences between battery packs and an independent protective circuit for each battery pack, the multi-battery packs may charge each other when battery packs are connected in parallel. Consequently, the battery performance is lowered and the multi-battery packs are damaged. Since some battery packs are replaced manually, the multi-battery packs charge each other and it is complicated to change batteries. Meanwhile, it is not convenient to monitor the battery life and the batter temperature, a battery with more power cannot be chosen preferentially and it is extremely not convenient.

In addition, WO 20161074216 A1 discloses a system and a method for automatically charging or discharging different battery packs so as to accommodate variation/difference of voltage of the different battery packs. In WO 20161074216 A1, the battery variables including one or more of a voltage, an electric current, a charging/discharging time, a temperature, Status of Charge (SOC), and Status of Health (SOH) of each battery pack are monitored by a monitoring module of a corresponding slave BMS; the battery variables of each battery pack are transferred to a master BMS and the status of each battery pack is calculated by the master BMS; and the electric current and voltage outputs of each battery pack are controlled via the corresponding slave BMS by the master BMS; in which a power electronic module of the master BMS is employed to connect or disconnect the battery packs with or from a charging station or a load so as to charge or discharge the battery packs in sequence or simultaneously.

The present disclosure discloses a method and system for automatic switchover between working states of multi-battery packs of electric vehicles in order to solve the problems of the prior art.

According to one aspect of one embodiment of the present disclosure, there is provided a method for automatic switchover between working states of a plurality of battery packs of electric vehicles, the method comprising:
determining a working state of each battery pack, the working state comprising a charging state, a discharging state or an idle state, wherein the determining the working state of each battery pack employs a control panel unit to real-time monitor charging and discharging parameters of the battery pack to determine the working state thereof;
if one battery pack of the battery packs is in a charging state, determining the battery packs are all in a charging state, and charging the battery packs via a charging unit;
if one battery pack of the battery packs is in a discharging state, determining the battery packs are all in a discharging state, and discharging the battery packs;
otherwise, determining the battery packs are in an idle state;
in a charging state, automatically charging the battery packs; and
in a discharging state, automatically discharging the battery packs.

In a class of the embodiment of the method for automatic switchover between working states of the battery packs of electric vehicles, automatically charging the battery packs in the charging state comprises:
real-time monitoring working parameters of each battery pack by the control panel unit; the working parameters comprising electric quantity of battery and battery temperature;
determining whether the electric quantity of each battery pack is greater than a set threshold value for charging;
if the electric quantity of each battery pack is greater than the threshold value for charging, randomly selecting a battery pack via a switch control module, connecting the battery back to a charging unit and charging the battery back until the charging of the battery pack is completed, then randomly selecting and charging another battery pack;
if the electric quantity of at least one battery pack of the battery packs is not greater than the threshold value for charging, selecting and charging the battery pack with the lowest electric quantity until the electric quantity of the battery pack with the lowest electric quantity reaches the set threshold value for charging, then charging the battery pack with the second lowest electric quantity until the electric quantity of the battery pack with the second lowest electric quantity reaches the set threshold value for charging;
determining whether the battery temperature of a to-be-charged battery pack is greater than a set threshold value of battery temperature;
charging the to-be-charged battery pack if the battery temperature thereof is not greater than the set threshold value of battery temperature; and
if the battery temperature of the to-be-charged battery pack is greater than the set threshold value of battery temperature, stopping charging the to-be-charged battery pack, and selecting and charging the battery pack with the lowest electric quantity and the battery temperature thereof less than the threshold value of battery temperature until the charging of all battery packs is completed or the battery temperature of all battery packs is greater than the set threshold value of battery temperature.

In a class of the embodiment of the method for automatic switchover between working states of the battery packs of electric vehicles, automatically discharging the battery packs comprises:
real-time monitoring working parameters of each battery pack by the control panel unit; the working parameters comprising electric quantity of battery and battery temperature;
determining whether the electric quantity of each battery pack is less than a threshold value for discharging;
stopping discharging if the electric quantity of all battery packs is less than the threshold value for discharging;
if the electric quantity of at least one of the battery packs is greater than the threshold value for discharging, selecting and discharging the battery pack with the largest electric quantity until the electric quantity of the battery pack with the largest electric quantity reaches the set threshold value for discharging, then selecting and discharging a battery pack with the second largest electric quantity until the electric quantity of all battery packs reaches the set threshold value for discharging;
determining whether the battery temperature of the current battery pack is greater than a set threshold value of battery temperature;
discharging the current battery pack if the battery temperature thereof is not greater than the set threshold value of battery temperature; and
stopping discharging the current battery pack if the battery temperature thereof is greater than the set threshold value of battery temperature, and selecting and discharging a battery pack with the highest electric quantity and the battery temperature thereof less than the threshold value of battery temperature until the discharging of all battery packs is completed or the battery temperature of all battery packs is greater than the set threshold value of battery temperature.

In a class of the embodiment of the method for automatic switchover between working states of the battery packs of electric vehicles, the threshold value of battery temperature is 45°C.

In a class of the embodiment of the method for automatic switchover between working states of the battery packs of electric vehicles, the threshold value of for charging is 90%.

In a class of the embodiment of the method for automatic switchover between working states of the battery packs of electric vehicles, the threshold value for discharging is 10%.

According to another aspect of the present disclosure, there is provided a system for automatic switchover between working states of a plurality of battery packs of electric vehicles, the system comprising: a control panel unit, a data collection module, a switch control module, the battery packs, a charging unit, and a load. In the system, the control panel unit is a core control unit of the system. The control panel unit is configured to set the threshold value of battery temperature, the threshold value for charging and the threshold value for discharging, and to monitor the working state of each battery pack, to analyze the electric quantity and battery temperature of each battery pack collected by the data collection module, and to send control instructions to the switch control module. The control instructions are constructed according to the following: 1) if one battery pack of the battery packs is in a charging state, determining the battery packs are all in a charging state, and charging the battery packs via a charging unit; 2) if one battery pack of the battery packs is in a discharging state, determining the battery packs are all in a discharging state, and discharging the battery packs; 3) otherwise, determining the battery packs are in an idle state; 4) in a charging state, automatically charging the battery packs; and 5) in a discharging state, automatically discharging the battery packs. The data collection module is configured to real-time collect parameter information comprising the electric quantity of each battery pack and the battery temperature of each battery pack, and to send the parameter information to the control panel unit. The control panel unit analyzes the working state of each battery pack and sends control instructions to the switch control module. The switch control module is configured to control the charging or discharging of a designated battery pack according to the control instructions of the control panel unit. The battery packs are connected to the data collection module and the switch control module in parallel. The charging unit is connected to the switch control module and charges the designated battery pack under the control of the switch control module. The load is connected to the switch control module and discharges the designated battery pack under the control of the switch control module.

Compared to the prior art, the method and system of the present disclosure have the advantages as follows.

The system of the present disclosure for automatic switchover between working states of multi-battery packs of electric vehicles are simple in structure and reasonable in design. When a plurality battery packs are employed, a single battery pack needs not to be designed too large thus saving space. The control panel unit controls the charging and discharging of a single battery pack by collecting parameter information comprising working states, battery capacity and battery temperature of the multi-battery packs so as to charge or discharge the multi-battery packs as gradually as possible. It is beneficial to battery safety and extends the service life of batteries.
FIG. 1 is a schematic diagram of a system for automatic switchover between working states of multi-battery packs of electric vehicles in accordance with another embodiment of the invention;
FIG. 2 is a flow chart of a method for automatic switchover between working states of multi-battery packs of electric vehicles in accordance with one embodiment of the invention;
FIG. 3 is a flow chart of a method for automatic switchover between working states of multi-battery packs of electric vehicles in accordance with another embodiment of the invention; and
FIG. 4 is a flow chart of a method for automatic switchover between working states of multi-battery packs of electric vehicles in accordance with still another embodiment of the invention.

Legend: 1. Control panel unit; 2. Data collection module; 3. Switch control module; 4. Battery pack; 5. Charging unit; 6. Load.

For further illustrating the present disclosure, experiments detailing a system and a method for automatic switchover between working states of multi-battery packs of electric vehicles in accordance with another embodiment of the invention are described below. It should be noted that the following examples are intended to describe and not to limit the present disclosure.

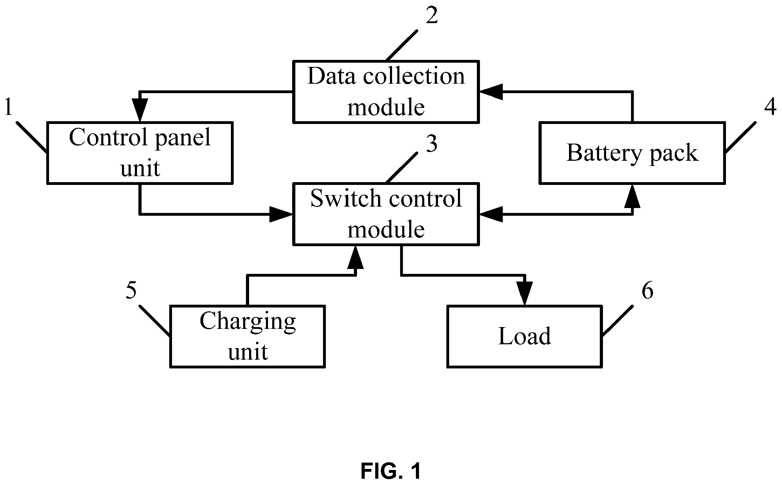

FIG. 1 is a structural diagram of a system of the present disclosure for automatic switchover between working states of multi-battery packs of electric vehicles. As shown in FIG. 1, the system for automatic multi-battery pack switchover of electric vehicle comprises:
a control panel unit 1, a data collection module 2, a switch control module 3, a battery pack 4, a charging unit 5 and a load 6.

The control panel unit 1 is the core control unit of the system. The control panel unit 1 sets the threshold value of battery temperature, the threshold value of batteries being charged and the threshold value of the capacity of discharging batteries, analyzes the battery capacity and battery temperature of the battery pack 4 collected by the data collection module 2 by monitoring the working state of the battery pack 4, and sends control instructions to the switch control module 3.

The data collection module 2 collects parameter information comprising the electric quantity of the battery pack 4 and the battery temperature of the battery pack 4 in real time, and sends the parameter information to the control panel unit 1. The control panel unit 1 analyzes the working state of the battery pack 4 and sends control instructions to the switch control module 3.

The switch control module 3 controls the charging or discharging of a designated battery pack 4 according to the control instructions of the control panel unit 1.

The battery pack 4 comprises a plurality of battery packs connected to the data collection module 2 and the switch control module 3 in parallel.

The charging unit 5 is connected to the switch control module 3 and charges the designated battery pack 4 under the control of the switch control module 3.

The load 6 is connected to the switch control module 3 and discharges the designated battery pack 4 under the control of the switch control module 3.

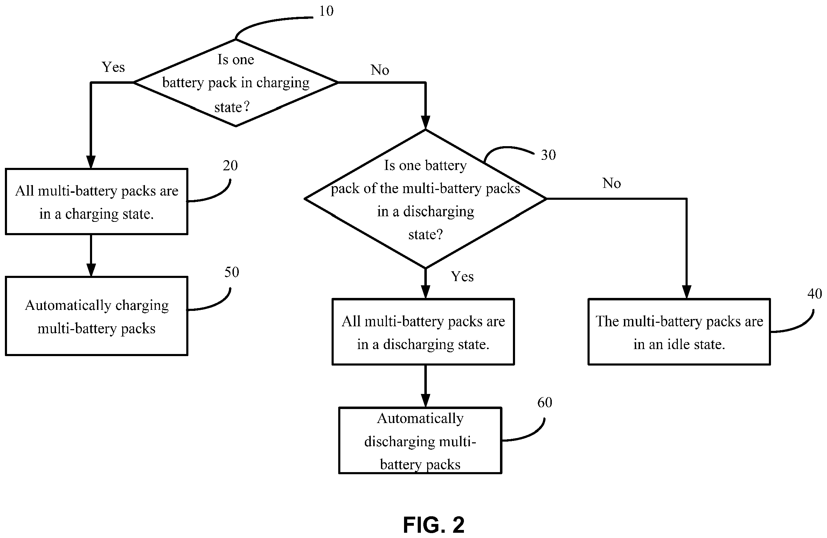

FIG. 2 is a flow diagram of a method of the present disclosure for automatic switchover between working states of multi-battery packs of electric vehicles. As shown in FIG. 2, the method for automatic switchover between working states of multi-battery packs of electric vehicles comprises:
10. determining the working state of the multi-battery packs 4. The working state comprises a charging state, a discharging state and an idle state. The determination method uses a control panel unit 1 to monitor charging and discharging parameters of the multi-battery packs 4 in real time to determine the working state of the multi-battery packs.
20. If one battery pack 4 is in a charging state, all the multi-battery packs 4 are in a charging state. The multi-battery packs 4 are charged by a charging unit 5.
30. If one battery pack 4 is in a discharging state, all the multi-battery packs 4 are in a discharging state. The multi-battery packs 4 are discharged.
40. Otherwise, the multi-battery packs 4 are all in an idle state.
50. In a charging state, the multi-battery packs 4 are charged automatically.
60. In a discharging state, the multi-battery packs 4 discharge automatically.

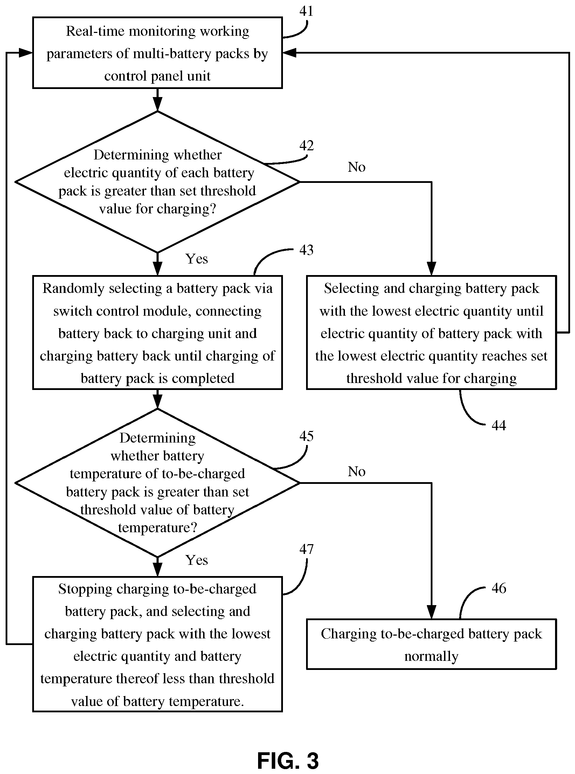

   FIG. 3 is a flow diagram of a method of the present disclosure for automatic switchover between working states of multi-battery packs of electric vehicles. As shown in FIG. 3, the multi-battery packs 4 are charged automatically in the charging state.
41. The control panel unit 1 monitors working parameters of the multi-battery packs 4. The working parameters comprise battery capacity and battery temperature.
42. The electric quantity of each battery pack 4 is assessed to see whether the electric quantity is greater than the threshold value of the capacity of the rechargeable battery. The threshold value of the capacity of the rechargeable battery is 90%.
43. If the electric quantity of all battery packs 4 is greater than the threshold value of the capacity of the rechargeable battery, a switch control module 3 chooses a battery pack 4 randomly and connects the battery pack with the charging unit 5 for charging until the charging of the battery pack 4 is completed. Then, the switch control module chooses another battery pack 4 randomly for charging.
44. If the electric quantity of a battery pack 4 is not greater than the threshold value of the capacity of the rechargeable battery, a battery pack 4 with the lowest electric quantity is charged until the electric quantity of the battery pack 4 reaches the set threshold value of the capacity of the rechargeable battery. Then, a battery pack 4 with the lowest remaining electric quantity is charged until the electric quantity of all battery packs 4 reaches the set threshold value of the capacity of the rechargeable battery.
45. The battery temperature of the battery pack 4 being charged is assessed to see whether the battery temperature is greater than the set threshold value of battery temperature. The threshold value of battery temperature is 45 °C.
46. If the battery temperature of the battery pack 4 being charged is not greater than the set threshold value of battery temperature, the battery pack 4 being charged is charged normally.
47. If the battery temperature of the battery pack 4 being charged is greater than the set threshold value of battery temperature, the charging of the battery pack 4 being charged stops. A battery pack 4 with the lowest electric quantity and the battery temperature less than the threshold value of battery temperature is chosen to be charged until the charging of all battery packs 4 is completed or the battery temperature of all battery packs 4 is greater than the set threshold value of battery temperature.

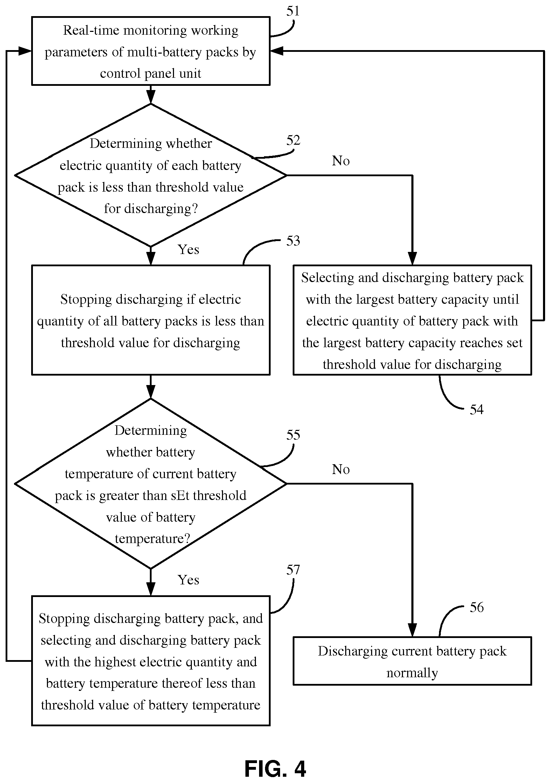

   FIG. 4 is a flow diagram of another embodiment of a method of the present disclosure for automatic switchover between working states of multi-battery packs of electric vehicles. As shown in FIG. 4, the automatic discharging of the multi-battery packs 4 in the discharging state comprises:
51. the real-time monitoring of working parameters of the multi-battery packs 4 by the control panel unit 1. The working parameters comprise battery capacity and battery temperature.
52. The electric quantity of each battery pack 4 is assessed to see whether the electric quantity is less than the set threshold value of the capacity of the discharging battery. The threshold value of the capacity of the discharging battery is 10%.
53. If the electric quantity of all battery packs 4 is less than the threshold value of the capacity of the discharging battery, all battery packs 4 can't discharge normally, need to stop discharging and then are charged.
54. If there is a battery pack 4 whose electric quantity is greater than the threshold value of the capacity of a discharging battery, a battery pack 4 with the largest battery capacity discharges until the electric quantity of the battery pack 4 reaches the set threshold value of the capacity of the discharging battery. Then, a battery pack 4 with the largest remaining electric quantity discharges until the electric quantity of all battery packs 4 reaches the set threshold value of the capacity of the discharging battery.
55. The battery temperature of the battery pack 4 being charged is assessed to see whether the battery temperature is greater than the set threshold value of battery temperature. The threshold value of battery temperature is 45 °C.
56. If the battery temperature of the discharging battery pack 4 is not greater than the set threshold value of battery temperature, the battery pack 4 being charged is charged normally.
57. If the battery temperature of the discharging battery pack 4 is greater than the set threshold value of battery temperature, the discharging of the battery pack stops. A battery pack 4 with the battery temperature less than the threshold value of battery temperature and the highest electric quantity is chosen to discharge until the electric quantity of all battery packs 4 reaches the threshold value of the capacity of discharging batteries or the battery temperature of all battery packs 4 is greater than the set threshold value of battery temperature.

A method and system provided by the present disclosure for automatic switchover between working states of multi-battery packs of electric vehicles are explained in detail. Embodiments are used to expound the principles of the present disclosure and the modes of carrying out the present disclosure. The explanation of the embodiments is just used to help understand the method of the present disclosure and the core idea of the present disclosure.

Unless otherwise indicated, the numerical ranges involved in the invention include the end values.

## Claims

1. A method for automatic switchover between working states of a plurality of battery packs (4) of electric vehicles, the method comprising:
1) determining a working state of each of the plurality of battery packs (4), the working state comprising a charging state, a discharging state or an idle state, wherein the determining the working state of each of the plurality of battery packs (4) employs a control panel unit (1) to real-time monitor charging and discharging parameters of each of the plurality of battery packs (4) to determine the working state thereof;
2) if one battery pack of the plurality of battery packs (4) is in a charging state, determining all of the plurality of battery packs (4) are in a charging state, and charging the plurality of battery packs (4) via a charging unit (5);
3) if one battery pack of the plurality of battery packs (4) is in a discharging state, determining all of the plurality of battery packs (4) are in a discharging state, and discharging the plurality of battery packs (4);
4) otherwise, determining the plurality of battery packs (4) is in an idle state;
5) in a charging state, automatically charging the plurality of battery packs (4); and
6) in a discharging state, automatically discharging the plurality of battery packs (4).

2. The method of claim 1, **characterized in that** automatically charging the plurality of battery packs in the charging state comprises:
2.1) real-time monitoring working parameters of each of the plurality of battery packs (4) by the control panel unit (1); the working parameters comprising electric quantity of_battery and battery temperature;
2.2) determining whether an electric quantity of each of the plurality of battery packs (4) is greater than a set threshold value for charging;
2.3) if the electric quantity of each of the plurality of battery packs (4) is greater than the threshold value for charging, randomly selecting a battery pack via a switch control module (3), connecting the battery back to the charging unit (5) and charging the battery back until the charging of the battery pack is completed, then randomly selecting and charging another battery pack;
2.4) if the electric quantity of at least one battery pack of the plurality of battery packs (4) is not greater than the threshold value for charging, selecting and charging a battery pack with the lowest electric quantity until the electric quantity of the battery pack with the lowest electric quantity reaches the set threshold value for charging, then charging a battery pack with the second lowest electric quantity until the electric quantity of the battery pack with the second lowest electric quantity reaches the set threshold value for charging;
2.5) determining whether the battery temperature of a to-be-charged battery pack is greater than a set threshold value of battery temperature;
2.6) charging the to-be-charged battery pack if the battery temperature thereof is not greater than the set threshold value of battery temperature; and
2.7) if the battery temperature of the to-be-charged battery pack is greater than the set threshold value of battery temperature, stopping charging the to-be-charged battery pack, and selecting and charging a battery pack with the lowest electric quantity and the battery temperature thereof less than the threshold value of battery temperature until the charging of all of the plurality of battery packs (4) is completed or the battery temperature of all of the plurality of battery packs (4) is greater than the set threshold value of battery temperature.

3. The method of claim 1, **characterized in that** automatically discharging the plurality of battery packs in the discharging state comprises:
3.1) real-time monitoring working parameters of each of the plurality of battery packs (4) by the control panel unit (1); the working parameters comprising electric quantity of battery and battery temperature;
3.2) determining whether an electric quantity of each of the plurality of battery packs (4) is less than a threshold value for discharging;
3.3) stopping discharging if the electric quantity of all of the plurality of battery packs (4) is less than the threshold value for discharging;
3.4) if the electric quantity of at least one of the plurality of battery packs (4) is greater than the threshold value for discharging, selecting and discharging a battery pack with the largest electric quantity until the electric quantity of the battery pack with the largest electric quantity reaches the set threshold value for discharging, then selecting and discharging a battery pack with the second largest electric quantity until the electric quantity of all of the plurality of battery packs reaches the set threshold value for discharging;
3.5) determining whether the battery temperature of a current battery pack is greater than a set threshold value of battery temperature;
3.6) discharging the current battery pack if the battery temperature thereof is not greater than the set threshold value of battery temperature; and
3.7) stopping discharging the current battery pack if the battery temperature thereof is greater than the set threshold value of battery temperature, and selecting and discharging a battery pack with the highest electric quantity and the battery temperature thereof less than the threshold value of battery temperature until the discharging of all of the plurality of battery packs (4) is completed or the battery temperature of all of the plurality of battery packs (4) is greater than the set threshold value of battery temperature.

4. The method of claim 2 or 3, **characterized in that** the threshold value of battery temperature is 45°C.

5. The method of claim 2, **characterized in that** the threshold value of for charging is 90%.

6. The method of claim 3, **characterized in that** the threshold value for discharging is 10%.

7. A system for automatic switchover between working states of a plurality of battery packs (4) of electric vehicles, the system comprising:
a control panel unit (1), a data collection module (2), a switch control module (3), the plurality of battery packs (4), a charging unit (5), and a load (6), wherein,
the control panel unit (1) is a core control unit of the system; the control panel unit (1) is configured to set a threshold value of battery temperature, a threshold value for charging and a threshold value for discharging, to monitor a working state of each of the plurality of battery packs (4), to analyze the electric quantity and the battery temperature of each of the plurality of battery packs (4) collected by the data collection module (2), and to send control instructions to the switch control module (3); wherein the control instructions are constructed according to the following:
7.1) if one battery pack of the plurality of battery packs (4) is in a charging state, determining all of the plurality of battery packs (4) are in a charging state, and charging the plurality of battery packs (4) via a charging unit;
7.2) if one battery pack of the plurality of battery packs (4) is in a discharging state, determining all of the plurality of battery packs (4) are in a discharging state, and discharging the plurality of battery packs (4);
7.3) otherwise, determining the plurality of battery packs (4) is in an idle state;
7.4) in a charging state, automatically charging the plurality of battery packs (4); and
7.5) in a discharging state, automatically discharging the plurality of battery packs (4);
the data collection module (2) is configured to real-time collect parameter information comprising the electric quantity of each of the plurality of battery packs (4) and the battery temperature of each of the plurality of battery packs (4), and to send the parameter information to the control panel unit (1); the control panel unit (1) is configured to analyze the working state of each of the plurality of battery packs (4) and send the control instructions to the switch control module (3);
the switch control module (3) is configured to control the charging or discharging of a designated battery pack according to the control instructions of the control panel unit (1);
the plurality of battery packs (4) is connected to the data collection module (2) and the switch control module (3) in parallel;
the charging unit (5) is connected to the switch control module (3) and charges the designated battery pack under the control of the switch control module (3); and
the load (6) is connected to the switch control module (3), and discharges the designated battery pack under the control of the switch control module (3).

## Patentansprüche

1. Verfahren zum automatischen Umschalten zwischen Arbeitszuständen einer Vielzahl von Batteriepacks (4) von Elektrofahrzeugen, wobei das Verfahren umfasst:
1) Bestimmen eines Arbeitszustands jedes der Vielzahl von Batteriepacks (4), wobei der Arbeitszustand einen Ladezustand, einen Entladezustand oder einen Ruhezustand umfasst, wobei das Bestimmen des Arbeitszustands jedes der Vielzahl von Batteriepacks (4) eine Bedienfeldeinheit (1) einsetzt, um Lade- und Entladeparameter jedes der Vielzahl von Batteriepacks (4) in Echtzeit zu überwachen, um deren Arbeitszustand zu bestimmen;
2) wenn sich ein Batteriepack der Vielzahl von Batteriepacks (4) in einem Ladezustand befindet, Bestimmen, dass sich alle der Vielzahl von Batteriepacks (4) in einem Ladezustand befinden, und Laden der Vielzahl von Batteriepacks (4) über eine Ladeeinheit (5);
3) wenn sich ein Batteriepack der Vielzahl von Batteriepacks (4) in einem Entladezustand befindet, Bestimmen, dass sich alle der Vielzahl von Batteriepacks (4) in einem Entladezustand befinden, und Entladen der Vielzahl von Batteriepacks (4);
4) ansonsten Bestimmen, dass sich die Vielzahl von Batteriepacks (4) in einem Ruhezustand befindet;
5) automatisches Laden der Vielzahl von Batteriepacks (4) in einem Ladezustand; und
6) automatisches Entladen der Vielzahl von Batteriepacks (4) in einem Entladezustand.

2. Verfahren nach Anspruch 1, **dadurch gekennzeichnet, dass** das automatische Laden der Vielzahl von Batteriepacks im Ladezustand umfasst:
2.1) Überwachen der Arbeitsparameter jedes der Vielzahl von Batteriepacks (4) durch die Bedienfeldeinheit (1) in Echtzeit; wobei die Arbeitsparameter die elektrische Batteriemenge und die Batterietemperatur umfassen;
2.2) Bestimmen, ob eine elektrische Menge jedes der Vielzahl von Batteriepacks (4) größer ist als ein festgelegter Schwellenwert zum Laden;
2.3) wenn die elektrische Menge jedes der Vielzahl von Batteriepacks (4) größer ist als der Schwellenwert zum Laden, zufälliges Auswählen eines Batteriepacks über ein Schaltersteuermodul (3), Verbinden des Batteriepacks mit der Ladeeinheit (5) und Laden der Batterie zurück, bis das Laden der Batterie abgeschlossen ist, dann zufälliges Auswählen und Laden eines anderen Batteriepacks;
2.4) wenn die elektrische Menge mindestens eines Batteriepacks der Vielzahl von Batteriepacks (4) nicht größer ist als der Schwellenwert zum Laden, Auswählen und Laden eines Batteriepacks mit der niedrigsten elektrischen Menge, bis die elektrische Menge des Batteriepacks mit der niedrigsten elektrischen Menge den eingestellten Schwellenwert zum Laden erreicht, dann Laden eines Batteriepacks mit der zweitniedrigsten elektrischen Menge, bis die elektrische Menge des Batteriepacks mit der zweitniedrigsten elektrischen Menge den eingestellten Schwellenwert zum Laden erreicht;
2.5) Bestimmen, ob die Batterietemperatur eines zu ladenden Batteriepacks größer ist als ein eingestellter Schwellenwert der Batterietemperatur;
2.6) Laden des zu ladenden Batteriepacks, wenn dessen Batterietemperatur den eingestellten Schwellenwert der Batterietemperatur nicht überschreitet; und
2.7) wenn die Batterietemperatur des zu ladenden Batteriepacks größer ist als der eingestellte Schwellenwert der Batterietemperatur, Abschließen des Ladens des zu ladenden Batteriepacks und Auswählen und Laden eines Batteriepacks mit der niedrigsten elektrischen Menge und dessen Batterietemperatur kleiner ist als der Schwellenwert der Batterietemperatur, bis das Laden aller der Vielzahl von Batteriepacks (4) abgeschlossen ist oder die Batterietemperatur aller der Vielzahl von Batteriepacks (4) größer ist als der eingestellte Schwellenwert der Batterietemperatur.

3. Verfahren nach Anspruch 1, **dadurch gekennzeichnet, dass** das automatische Entladen der Vielzahl von Batteriepacks im Entladezustand umfasst:
3.1) Überwachen von Arbeitsparametern jedes der Vielzahl von Batteriepacks (4) durch die Bedienfeldeinheit (1) in Echtzeit; die Arbeitsparameter umfassen die elektrische Batteriemenge und die Batterietemperatur;
3.2) Bestimmen, ob eine elektrische Menge jedes der Vielzahl von Batteriepacks (4) kleiner ist als ein Schwellenwert zum Entladen;
3.3) Unterbrechen des Entladens, wenn die elektrische Menge aller der Vielzahl von Batteriepacks (4) kleiner ist als der Schwellenwert zum Entladen;
3.4) wenn die elektrische Menge mindestens eines der Vielzahl von Batteriepacks (4) größer ist als der Schwellenwert zum Entladen, Auswählen und Entladen eines Batteriepacks mit der größten elektrischen Menge, bis die elektrische Menge des Batteriepacks mit der größten elektrischen Menge den eingestellten Schwellenwert zum Entladen erreicht, dann Auswählen und Entladen eines Batteriepacks mit der zweitgrößten elektrischen Menge, bis die elektrische Menge aller der Vielzahl von Batteriepacks den eingestellten Schwellenwert zum Entladen erreicht;
3.5) Bestimmen, ob die Batterietemperatur eines aktuellen Batteriepacks größer ist als ein eingestellter Schwellenwert der Batterietemperatur;
3.6) Entladen des aktuellen Batteriepacks, wenn dessen Batterietemperatur nicht größer ist als der eingestellte Schwellenwert der Batterietemperatur; und
3.7) Unterbrechen des Entladens des aktuellen Batteriepacks, wenn dessen Batterietemperatur größer ist als der eingestellte Schwellenwert der Batterietemperatur, und Auswählen und Entladen eines Batteriepacks mit der höchsten elektrischen Menge und dessen Batterietemperatur kleiner ist als der Schwellenwert der Batterietemperatur, bis das Entladen aller der Vielzahl von Batteriepacks (4) abgeschlossen ist oder die Batterietemperatur aller der Vielzahl von Batteriepacks (4) größer ist als der eingestellte Schwellenwert der Batterietemperatur.

4. Verfahren nach Anspruch 2 oder 3, **dadurch gekennzeichnet, dass** der Schwellenwert der Batterietemperatur 45 °C beträgt.

5. Verfahren nach Anspruch 2, **dadurch gekennzeichnet, dass** der Schwellenwert für das Laden 90% beträgt.

6. Verfahren nach Anspruch 3, **dadurch gekennzeichnet, dass** der Schwellenwert für das Entladen 10% beträgt.

7. System zum automatischen Umschalten zwischen Arbeitszuständen einer Vielzahl von Batteriepacks (4) von Elektrofahrzeugen, wobei das System umfasst:
eine Bedienfeldeinheit (1), ein Datensammelmodul (2), ein Schaltersteuermodul (3), die Vielzahl von Batteriepacks (4), eine Ladeeinheit (5) und eine Last (6), wobei
die Bedienfeldeinheit (1) eine Kernsteuereinheit des Systems ist; die Bedienfeldeinheit (1) konfiguriert ist, um einen Schwellenwert der Batterietemperatur, einen Schwellenwert zum Laden und einen Schwellenwert zum Entladen einzustellen, um einen Arbeitszustand jedes der Vielzahl von Batteriepacks (4) zu überwachen, um die elektrische Menge und die Batterietemperatur jedes der Vielzahl von Batteriepacks (4), die von dem Datensammelmodul (2) gesammelt wurden, zu analysieren und um Steueranweisungen an das Schaltersteuermodul (3) zu senden; wobei die Steueranweisungen gemäß dem Folgenden aufgebaut sind:
7.1) wenn sich ein Batteriepack der Vielzahl von Batteriepacks (4) in einem Ladezustand befindet, Bestimmen, dass sich alle der Vielzahl von Batteriepacks (4) in einem Ladezustand befinden, und Laden der Vielzahl von Batteriepacks (4) über eine Ladeeinheit;
7.2) wenn sich ein Batteriepack der Vielzahl von Batteriepacks (4) in einem Entladezustand befindet, Bestimmen, dass sich alle der Vielzahl von Batteriepacks (4) in einem Entladezustand befinden, und Entladen der Vielzahl von Batteriepacks (4);
7.3) ansonsten Bestimmen, dass sich die Vielzahl von Batteriepacks (4) in einem Ruhezustand befinden;
7.4) automatisches Laden der Vielzahl von Batteriepacks (4) in einem Ladezustand; und
7.5) automatisches Entladen der Vielzahl von Batteriepacks (4) in einem Entladezustand;
das Datensammelmodul (2) konfiguriert ist, um in Echtzeit Parameterinformationen zu sammeln, die die elektrische Menge jedes der Vielzahl von Batteriepacks (4) und die Batterietemperatur jedes der Vielzahl von Batteriepacks (4) umfassen, und die Parameterinformationen an die Bedienfeldeinheit (1) zu senden; wobei die Bedienfeldeinheit (1) konfiguriert ist, um den Arbeitszustand jedes der Vielzahl von Batteriepacks (4) zu analysieren und die Steueranweisungen an das Schaltersteuermodul (3) zu senden;
das Schaltersteuermodul (3) konfiguriert ist, um das Laden oder Entladen eines bestimmten Batteriepacks gemäß den Steueranweisungen der Bedienfeldeinheit (1) zu steuern;
die Vielzahl von Batteriepacks (4) parallel mit dem Datensammelmodul (2) und dem Schaltersteuermodul (3) verbunden ist;
die Ladeeinheit (5) mit dem Schaltersteuermodul (3) verbunden ist und den bestimmten Batteriepack unter der Steuerung des Schaltersteuermoduls (3) auflädt; und
die Last (6) mit dem Schaltersteuermodul (3) verbunden ist und den bestimmten Batteriepack unter der Steuerung des Schaltersteuermoduls (3) entlädt.

## Revendications

1. Procédé pour la commutation automatique entre des états de fonctionnement d'une pluralité de blocs de batteries (4) de véhicules électriques, le procédé comprenant :
1) la détermination d'un état de fonctionnement de chacun parmi la pluralité de blocs de batteries (4), l'état de fonctionnement comprenant un état de charge, un état de décharge ou un état inactif, la détermination de l'état de fonctionnement de chacun parmi la pluralité de blocs de batteries (4) utilisant une unité de panneau de commande (1) pour surveiller en temps réel des paramètres de charge et de décharge de chacun parmi la pluralité de blocs de batteries (4) pour déterminer l'état de fonctionnement de ceux-ci ;
2) si l'un parmi la pluralité de blocs de batteries (4) est dans un état de charge, la détermination de l'état de charge de la totalité de la pluralité de blocs de batteries (4), et la charge de la pluralité de blocs de batteries (4) par le biais d'une unité de charge (5) ;
3) si l'un parmi la pluralité de blocs de batteries (4) est dans un état de décharge, la détermination de l'état de décharge de la totalité de la pluralité de blocs de batteries (4), et la décharge de la pluralité de blocs de batteries (4) ;
4) autrement, la détermination de l'état inactif de la pluralité de blocs de batteries (4) ;
5) dans un état de charge, la charge automatique de la pluralité de blocs de batteries (4) ; et
6) dans un état de décharge, la décharge automatique de la pluralité de blocs de batteries (4).

2. Procédé selon la revendication 1, **caractérisé en ce que** la charge automatique de la pluralité de blocs de batteries dans l'état de charge comprend :
2.1) la surveillance en temps réel de paramètres de fonctionnement de chacun parmi la pluralité de blocs de batteries (4) par l'unité de panneau de commande (1) ; les paramètres de fonctionnement comprenant la quantité électrique de batterie et la température de batterie ;
2.2) la détermination si une quantité électrique de chacun parmi la pluralité de blocs de batteries (4) est supérieure à une valeur seuil prédéfinie pour la charge ;
2.3) si la quantité électrique de chacun parmi la pluralité de blocs de batteries (4) est supérieure à la valeur seuil pour la charge, la sélection aléatoire d'un bloc de batteries par le biais d'un module de commande de commutation (3), la connexion du bloc de batteries à l'unité de charge (5) et la charge du bloc de batteries jusqu'à l'achèvement de la charge du bloc de batteries, puis la sélection aléatoire et la charge d'un autre bloc de batteries ;
2.4) si la quantité électrique d'au moins un bloc de batteries parmi la pluralité de blocs de batteries (4) n'est pas supérieure à la valeur seuil pour la charge, la sélection et la charge d'un bloc de batteries présentant la quantité électrique la plus faible, jusqu'à ce que la quantité électrique du bloc de batteries présentant la quantité électrique la plus faible atteigne la valeur seuil prédéfinie pour la charge, puis la charge d'un bloc de batteries présentant la deuxième plus faible quantité électrique jusqu'à ce que la quantité électrique du bloc de batteries présentant la deuxième plus faible quantité électrique atteigne la valeur seuil prédéfinie pour la charge ;
2.5) la détermination si la température de batterie d'un bloc de batteries à charger est supérieure à une valeur seuil prédéfinie de température de batterie ;
2.6) la charge du bloc de batteries à charger si la température de batterie de celui-ci n'est pas supérieure à la valeur seuil prédéfinie de température de batterie ; et
2.7) si la température de batterie du bloc de batteries à charger est supérieure à la valeur seuil prédéfinie de température de batterie, l'arrêt de la charge du bloc de batteries à charger, et la sélection et la charge d'un bloc de batteries présentant la quantité électrique la plus faible et la une température de batterie inférieure à la valeur seuil de température de batterie, jusqu'à l'achèvement de la charge de la totalité de la pluralité de blocs de batteries (4) ou jusqu'à ce que la température de batterie de la totalité de la pluralité de blocs de batteries (4) soit supérieure à la valeur seuil prédéfinie de température de batterie.

3. Procédé selon la revendication 1, **caractérisé en ce que** la décharge automatique de la pluralité de blocs de batteries dans l'état de décharge comprend :
3.1) la surveillance en temps réel de paramètres de fonctionnement de chacun parmi la pluralité de blocs de batteries (4) par l'unité de panneau de commande (1) ; les paramètres de fonctionnement comprenant une quantité électrique de batterie et une température de batterie ;
3.2) la détermination si une quantité électrique de chacun parmi la pluralité de blocs de batteries (4) est inférieure à une valeur seuil pour la décharge ;
3.3) l'arrêt de la décharge si la quantité électrique de la totalité de la pluralité de blocs de batteries (4) est inférieure à la valeur seuil pour la décharge ;
3.4) si la quantité électrique de l'un au moins parmi la pluralité de blocs de batteries (4) est supérieure à la valeur seuil pour la décharge, la sélection et la décharge d'un bloc de batteries présentant la quantité électrique la plus élevée, jusqu'à ce que la quantité électrique du bloc de batteries présentant la quantité électrique la plus élevée atteigne la valeur seuil prédéfinie pour la décharge, puis la sélection et la décharge d'un bloc de batteries présentant la deuxième quantité électrique la plus élevée jusqu'à ce que la quantité électrique de la totalité de la pluralité de blocs de batteries atteigne la valeur seuil prédéfinie pour la décharge ;
3.5) la détermination si la température de batterie d'un bloc de batteries actuel est supérieure à une valeur seuil prédéfinie de température de batterie ;
3.6) la décharge du bloc de batteries actuel si la température de batterie de celui-ci n'est pas supérieure à la valeur seuil prédéfinie de température de batterie ; et
3.7) l'arrêt de la décharge du bloc de batteries actuel si la température de batterie de celui-ci est supérieure à la valeur seuil prédéfinie de température de batterie, et la sélection et la décharge d'un bloc de batteries présentant la quantité électrique la plus élevée et une température de batterie inférieure à la valeur seuil de température de batterie, jusqu'à l'achèvement de la décharge de la totalité de la pluralité de blocs de batteries (4) ou jusqu'à ce que la température de batterie de la totalité de la pluralité de blocs de batteries (4) soit supérieure à la valeur seuil prédéfinie de température de batterie.

4. Procédé selon la revendication 2 ou 3, **caractérisé en ce que** la valeur seuil de température de batterie s'élève à 45°C.

5. Procédé selon la revendication 2, **caractérisé en ce que** la valeur seuil pour la charge s'élève à 90%.

6. Procédé selon la revendication 3, **caractérisé en ce que** la valeur seuil pour la décharge s'élève à 10%.

7. Système pour la commutation automatique entre des états de fonctionnement d'une pluralité de blocs de batteries (4) de véhicules électriques, le système comprenant :
une unité de panneau de commande (1), un module de collecte de données (2), un module de commande de commutation (3), la pluralité de blocs de batteries (4), une unité de charge (5), et une charge (6), dans lequel
l'unité de panneau de commande (1) est une unité de commande centrale du système ; l'unité de panneau de commande (1) est configurée pour définir une valeur seuil de température de batterie, une valeur seuil pour la charge et une valeur seuil pour la décharge, pour surveiller un état de fonctionnement de chacun parmi la pluralité de blocs de batteries (4), pour analyser la quantité électrique et la température de batterie collectées par le module de collecte de données (2) pour chacun parmi la pluralité de blocs de batteries (4), et pour envoyer des instructions de commande au module de commande de commutation (3) ; dans lequel les instructions de commande sont constituées de la manière suivante :
7.1) si un bloc de batteries parmi la pluralité de blocs de batteries (4) est dans un état de charge, détermination de l'état de charge de la totalité de la pluralité de blocs de batteries (4), et charge de la pluralité de blocs de batteries (4) par le biais d'une unité de charge ;
7.2) si un bloc de batteries parmi la pluralité de blocs de batteries (4) est dans un état de décharge, détermination de l'état de décharge de la totalité de la pluralité de blocs de batteries (4), et décharge de la pluralité de blocs de batteries (4) ;
7.3) autrement, détermination d'un état inactif de la pluralité de blocs de batteries (4) ;
7.4) dans un état de charge, charge automatique de la pluralité de blocs de batteries (4) ; et
7.5) dans un état de décharge, décharge automatique de la pluralité de blocs de batteries (4) ;
la module de collecte de données (2) est configuré pour collecter en temps réel des informations de paramètres comprenant la quantité électrique de chacun parmi la pluralité de blocs de batteries (4) et la température de batterie de chacun parmi la pluralité de blocs de batteries (4), et pour envoyer les informations de paramètres à l'unité de panneau de commande (1) ; l'unité de panneau de commande (1) est configurée pour analyser l'état de fonctionnement de chacun parmi la pluralité de blocs de batteries (4) et pour envoyer les instructions de commande au module de commande de commutation (3) ;
le module de commande de commutation (3) est configuré pour commander la charge ou la décharge d'un bloc de batteries désigné en fonction des instructions de commande de l'unité de panneau de commande (1) ;
la pluralité de blocs de batteries (4) est connectée en parallèle au module de collecte de données (2) et au module de commande de commutation (3) ;
l'unité de charge (5) est connectée au module de commande de commutation (3) et charge le bloc de batteries désigné sous la commande du module de commande de commutation (3) ; et
la charge (6) est connectée au module de commande de commutation (3), et décharge le bloc de batteries désigné sous la commande du module de commande de commutation (3).
